# EUROPEAN PATENT APPLICATION

(11) **EP 1 621 435 A2**
(43) Date of publication of application: **01.02.2006**
(21) Application number: 05016219.7
(22) Date of filing: 26.07.2005
(51) Int. Cl.: B60T 8/88

(54) **Apparatus for controlling automobile braking**

(30) Priority: 26.07.2004 JP 2004216699
(71) Applicant: Hitachi, Ltd., Tokyo 100-8280 (JP)
(72) Inventor: Manaka, Toshio, Chiyoda-ku Tokyo 100-8220 (JP); Asano, Seiji, Chiyoda-ku Tokyo 100-8220 (JP); Nishino, Kimio, Chiyoda-ku Tokyo 100-8220 (JP)
(74) Representative: Beetz & Partner

(57) **Abstract**

The invention relates to a brake control apparatus for controlling braking applied to wheels (Wl-W4) of a motor driven vehicle to decelerate the vehicle, comprising, a braking force generator (B1-B4) for generating a braking force applicable to the wheels, a failure detector (12) for detecting a failure of generating the braking force on at least one of the wheels, and a controller (13) for changing an actually obtainable degree on the vehicle in accordance with the detected failure.

## Description

### Background of the Invention

The present invention relates to a brake control apparatus for controlling braking applied to wheels of a motor driven vehicle to decelerate the vehicle.

JP-Hei-11-78859 discloses that when a brake of one of wheels is in failure, a braking force of the other one of the wheels opposite to the one of wheels in a left-right direction is weakened.

### Brief Summary of the Invention

An object of the present invention is to provide a brake control apparatus for controlling braking applied to wheels of a motor driven vehicle to decelerate the vehicle, by which apparatus a safety of the vehicle is restrained from being deteriorated by a failure of generating a braking force on at least one of vehicle wheels.

According to the invention, a brake control apparatus for controlling braking applied to wheels of a motor (electric motor, internal combustion engine or the like) driven vehicle to decelerate the vehicle(, in which vehicle rotations, braking, steering and so forth of the wheels are controllable in accordance with an ordered degree (calculated, estimated, detected, determined and/or measured from displacement value of brake pedal, accelerator pedal, steering wheel and/or the like from an idle and/or neutral position thereof as not being operated, moved, pressed and/or rotated by the vehicle driver) ordered by a vehicle driver), may comprise a braking force generator for generating a braking force applicable to the wheels, a failure detector for detecting a failure of generating the braking force on at least one of the wheels (= a failure on at least one of the wheels), and/or a controller for changing in accordance with the detected failure (a rate of) an actually obtainable degree on the vehicle (with respect to an ordered degree calculated, estimated, detected, determined and/or measured from displacement value of brake pedal, accelerator pedal, steering wheel and/or the like from an idle or neutral position thereof as not being operated, moved, pressed and/or rotated by the vehicle driver).

If the controller is capable of changing in accordance with the detected failure a rate of the actually obtainable degree with respect to an ordered degree, and a pair of the actually obtainable degree and the ordered degree is one of a pair of an actually obtainable power value for driving the vehicle and an ordered power value for driving the vehicle, a pair of an actually obtainable vehicle speed value of the vehicle and an ordered vehicle speed value, a pair of an actually obtainable braking force value applicable to the wheels and an ordered braking force value, a pair of an actually obtainable braking force value applicable to selected at least one of the wheels and an ordered braking force value, a pair of an actually obtainable brake pedal reaction force value (against being pressed to generate the braking force) and an ordered braking force value, and a pair of an actually obtainable steering wheel reaction force value (against being rotated to turn a proceeding direction of the vehicle) and an ordered steering angle value, a pair of an actually obtainable (permitted minimum) number of motor (motor original or before passing shift gears) revolution per one revolution of the wheel and an ordered number of motor (motor original or before passing shift gears) revolution per one revolution of the wheel (through a transmission mechanism), a pair of an actually obtainable braking force value applicable to selected at least one of the wheels and an ordered braking force value, and a pair of an actually obtainable accelerator pedal reaction force value (against being pressed to accelerate the vehicle) and an ordered power value for driving the vehicle, the rate is changed in accordance with whether or not the failure on the at least one of the wheels is detected.

Alternately, the rate may changed in accordance with a number of the at least one of the wheels on which the failure is detected, the rate obtainable when the failure on the at least one of the wheels is not detected may be greater than the rate obtainable when the failure on the at least one of the wheels is detected, the rate obtainable when the failure on the at least one of the wheels is not detected may be smaller than the rate obtainable when the failure on the at least one of the wheels is detected, the rate may increase in accordance with an increase of the number of the at least one of the wheels on which the failure is detected, the rate may decreases in accordance with an increase of the number of the at least one of the wheels on which the failure is detected, the rate obtainable when the failure on the at least one of the wheels is not detected may be smaller than the rate obtainable when the failure on the at least one of the wheels is detected while another rate of another actually obtainable degree on the vehicle with respect to the ordered degree obtainable when the failure on the at least one of the wheels is not detected is greater than the another rate obtainable when the failure on the at least one of the wheels is detected, or the rate obtainable when the failure on the at least one of the wheels is not detected may be different from the rate obtainable when the failure on the at least one of the wheels is detected while another rate of another actually obtainable degree on the vehicle with respect to the ordered degree obtainable when the failure on the at least one of the wheels is not detected is equal to the another rate obtainable when the failure on the at least one of the wheels is detected.

If one of an actual maximum motor output power value for driving the vehicle, an actual maximum vehicle traveling speed and an actual maximum number of revolution of the wheel per one revolution of the motor (motor original one revolution before passing shift gears) permitted to be obtained when the failure on the at least one of the wheels is detected is smaller than corresponding one of an actual maximum motor output power value for driving the vehicle, an actual maximum vehicle traveling speed and an actual maximum number of revolution of the wheel per one revolution of the motor (motor original one revolution before passing shift gears) permitted to be obtained when the failure on the at least one of the wheels is not detected, an excessive vehicle speed is prevented even when ordered by the vehicle driver.

When the controller is capable of changing in accordance with the detected failure a rate of the actually obtainable degree with respect to an ordered degree, the vehicle has four (front left, front right, rear left and rear right ones) of the wheels (surrounding a center of gravity of the vehicle to support the vehicle) and the failure on one of the wheels is detected (or occurs), if a rate of the braking force value to be actually applicable to the other one of the wheels diagonally opposite to the one of the wheels with respect to an ordered braking force value is made smaller than another rate of the braking force value to be actually applicable to the other one of the wheels with respect to the ordered braking force value obtainable when the failure on the one of the wheels is not detected (or does not occur), a capability of keeping the vehicle to proceed straightly when being braked is reinforced.

If a rate of the braking force value to be actually applicable to the one of the wheels with respect to the ordered braking force value obtainable when the failure on the one of the wheels is detected (or occurs) is made smaller than another rate of the braking force value to be actually applicable to the one of the wheels with respect to the ordered braking force value obtainable when the failure on the one of the wheels is not detected (or does not occur), an uncontrolled action of the one of the wheels is restrained.

If a rate of the braking force value to be actually applicable to the further other one of the wheels other than the one of the wheels and the other one of the wheels with respect to the ordered braking force value obtainable when the failure on the one of the wheels is detected (or occurs) is made greater than another rate of the braking force value to be actually applicable to the further other one of the wheels with respect to the ordered braking force value obtainable when the failure on the one of the wheels is not detected (or does not occur), a decrease of the braking force applicable to the vehicle is restrained.

If a rate of the braking force value to be actually applicable to each of the further other two of the wheels other than the one of the wheels and the other one of the wheels with respect to the ordered braking force value obtainable when the failure on the one of the wheels is detected (or occurs) is made greater than another rate of the braking force value to be actually applicable to each of the further other two of the wheels with respect to the ordered braking force value obtainable when the failure on the one of the wheels is not detected (or does not occur), a decrease of the braking force applicable to the vehicle is restrained.

If when the ordered braking force value is less than a predetermined value, a rate of the braking force value to be actually applicable to the further other one of the wheels other than the one of the wheels and the other one of the wheels with respect to the ordered braking force value obtainable when the failure on the one of the wheels is detected (or occurs) is made greater than another rate of the braking force value to be actually applicable to the further other one of the wheels with respect to the ordered braking force value obtainable when the failure on the one of the wheels is not detected (or does not occur), and when the ordered braking force value is not less than the predetermined value, the rate of the braking force value to be actually applicable to the further other one of the wheels with respect to the ordered braking force value obtainable when the failure on the one of the wheels is detected (or occurs) is prevented from being made greater than the another rate of the braking force value to be actually applicable to the further other one of the wheels with respect to the ordered braking force value obtainable when the failure on the one of the wheels is not detected (or does not occur), a decrease of the braking force applicable to the vehicle is restrained..

If when the controller is capable of changing in accordance with the detected failure a rate of the actually obtainable degree with respect to an ordered degree, the vehicle has four (front left, front right, rear left and rear right ones) of the wheels (surrounding a center of gravity of the vehicle to support the vehicle) and the failure on the one of the wheels is detected (or occurs), a rate of the braking force value to be actually applicable to the other one of the wheels with respect to an ordered braking force value obtainable when the one of the wheels is a front one in a proceeding direction of the vehicle is made smaller than another rate of the braking force value to be actually applicable to the other one of the wheels with respect to the ordered braking force value obtainable when the one of the wheels is a rear one in the proceeding direction of the vehicle, a capability of keeping the vehicle to proceed straightly when being braked is reinforced.

It is preferable that the braking force includes at least one of a frictional force and a magnetic force to be transmitted to the wheels to be braked, wherein a value of the frictional force is adjustable by changing a contact pressure between a stationary member restrained from moving with respect to a vehicle body and a rotary member connected to each of the wheels, and a value of the magnetic force is adjustable by changing an electric current caused (or generated) (in an electromagnetic brake or motor or generator) by a relative movement (rotation) between the stationary and rotary member.

When a value of the braking force is adjustable by changing a contact pressing force between a stationary member restrained from moving with respect to a vehicle body and a rotary member connected to each of the wheels, the controller is capable of changing in accordance with the detected failure a rate of the braking force value to be actually applicable to at least one of the wheels with respect to an ordered braking force value, and the rate of the actually applicable braking force value with respect to the ordered braking force value is changeable by changing a rate of the contact pressing force value with respect to the ordered braking force value, the rate of the contact pressing force value with respect to the ordered braking force value is changeable by changing at least one of a rate of, with respect to the ordered braking force value, an instruction signal value to be applied to an actuator to generate the contact pressing force value corresponding to the instruction signal value and a rate of, with respect to the actually measured contact pressing force value, a comparison signal value varying in accordance with the actually measured contact pressing force value to be compared with the instruction signal value to decrease a difference between the instruction signal value and the comparison signal value, and the at least one of the rate of the instruction signal value with respect to the ordered braking force value and the rate of the comparison signal value with respect to the actually measured contact pressing force value varying in accordance with the detected failure is predetermined in a memory of the apparatus. For decreasing the rate of the braking force value to be actually applicable to the at least one of the wheels with respect to the ordered braking force value (weakening the braking force to be applied to the at least one of the wheels), the rate of the instruction signal value with respect to the ordered braking force value is decreased and/or the rate of the comparison signal value with respect to the actually measured contact pressing force value is increased, in comparison with the rate for normal or non-failure condition. For increasing the rate of the braking force value to be actually applicable to the at least one of the wheels with respect to the ordered braking force value (strengthening the braking force to be applied to the at least one of the wheels), the rate of the instruction signal value with respect to the ordered braking force value is increased and/or the rate of the comparison signal value with respect to the actually measured contact pressing force value is decreased, in comparison with the rate for normal or non-failure condition.

If the controller is capable of changing in accordance with the detected failure a rate of the actually obtainable degree with respect to an ordered degree, and the rate obtainable when the failure on the at least one of the wheel is detected is less than the rate obtainable when the failure on the at least one of the wheel is not detected, when a pair of the actually obtainable degree and the ordered degree is one of a pair of an actually obtainable motor output power value for driving the vehicle and an ordered power value for driving the vehicle, a pair of an actually obtainable vehicle traveling speed value of the vehicle and an ordered vehicle traveling speed value, a pair of an actually obtainable braking force value applicable to the wheels and an ordered braking force value, a pair of an actually obtainable braking force value applicable to selected at least one of the wheels and an ordered braking force value, a pair of an actually obtainable brake pedal reaction force value (against being pressed to generate the braking force) and an ordered braking force value, and a pair of an actually obtainable steering wheel reaction force value (against being rotated to turn a proceeding direction of the vehicle) and an ordered steering angle value, an excessive vehicle speed is prevented even when ordered by the vehicle driver and/or a feeling on operating the vehicle is made as constant as possible, when the failure occurs.

If the controller is capable of changing in accordance with the detected failure a rate of the actually obtainable degree with respect to an ordered degree, and the rate obtainable when the failure on the at least one of the wheel is detected is more than the rate obtainable when the failure on the at least one of the wheel is not detected, when a pair of the actually obtainable degree and the ordered degree is one of a pair of an actually obtainable (permitted minimum) number of motor (motor original or before passing shift gears) revolution per one revolution of the wheel and an ordered number of motor (motor original or before passing shift gears) revolution per one revolution of the wheel (through a transmission mechanism), a pair of an actually obtainable braking force value applicable to selected at least one of the wheels and an ordered braking force value, and a pair of an actually obtainable accelerator pedal reaction force value (against being pressed to accelerate the vehicle) and an ordered power value for driving the vehicle, an excessive vehicle speed is prevented even when ordered by the vehicle driver and/or a feeling on operating the vehicle is made as constant as possible, when the failure occurs.

If when the controller is capable of changing in accordance with the detected failure a rate of the actually obtainable degree with respect to an ordered degree, the vehicle has four (front left, front right, rear left and rear right ones) of the wheels (surrounding a center of gravity of the vehicle to support the vehicle), the failure on a pair of the wheels diagonally opposite to each other is detected and the failure on another pair of the wheels diagonally opposite to each other is not detected, a difference between a rate of the braking force value to be actually applicable to one of the wheels of the another pair with respect to an ordered braking force value and a rate of the braking force value to be actually applicable to the other one of the wheels of the another pair with respect to the ordered braking force value is made smaller than a difference between the rate of the braking force value to be actually applicable to the one of the wheels of the another pair with respect to the ordered braking force value and the rate of the braking force value to be actually applicable to the other one of the wheels of the another pair with respect to the ordered braking force value obtainable when the failure of the pair of the wheels and the another pair of the wheels are not detected, a capability of keeping the vehicle to proceed straightly when being braked is reinforced.

The above features can be combined in any way either as a whole or in part, wherein this combination is still within the scope of disclosure.

Other objects, features and advantages of the invention will become apparent from the following description of the embodiments of the invention taken in conjunction with the accompanying drawings.

### Brief Description of the Several Views of the Drawings

Fig. 1 is a view showing an embodiment of automobile including an electrically driven brake system of the invention.
Fig. 2 is a view showing an embodiment of the system of the invention.
Fig. 3 is a view showing an embodiment of the system of the invention.
Fig. 4 is a view showing in detail an embodiment of a brake control unit of the invention.
Fig. 5 is a view showing an embodiment of the invention.
Fig. 6 is a view showing an embodiment of the invention.
Figs. 7a-c are views showing embodiments of the invention.
Fig. 8a-b are views showing embodiments of the invention.
Fig. 9 is a view showing an embodiment of the invention.
Fig. 10 is a view showing another embodiment of the invention.
Fig. 11 is a view showing another embodiment of the invention.
Fig. 12 is a view showing an embodiment of a control flow of the invention.

### Detailed Description of the Invention

Hereafter, embodiments of the invention will be explained in detail with using the drawings.

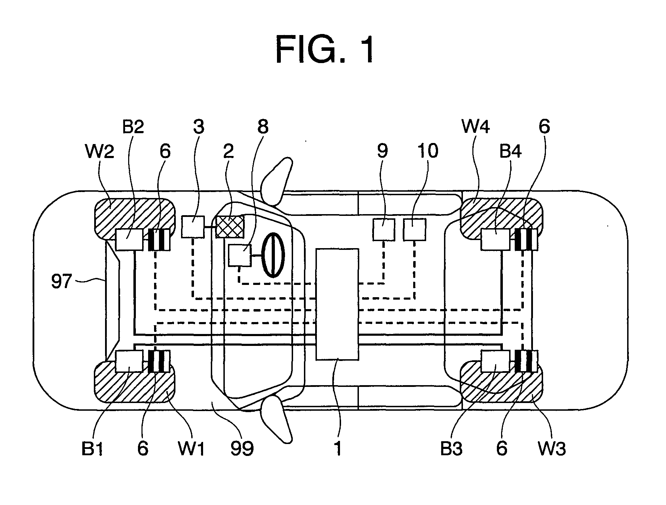

Fig. 1 shows an embodiment of automobile on which a braking control apparatus is mounted.

On wheels W1 (front left), W2 (front right), W3 (rear left) and W4 (rear right), electrically driven brake units (hereafter, called as EMB unit) are mounted respectively to generate a braking force on each of the wheels W1-W4 in accordance with a control signal from a brake control unit 1.

The brake control unit 1 is connected to a brake stroke sensor 3 for detecting a moved amount of a brake pedal 2 by a driver, and calculates necessary braking forces on the basis of the input moved amount by the driver so that control signals are output to the EMB units B1-B4 to generate the braking forces. The EMB units B1-B4 generate the braking forces respectively on the basis of the control signals received from the brake control unit.

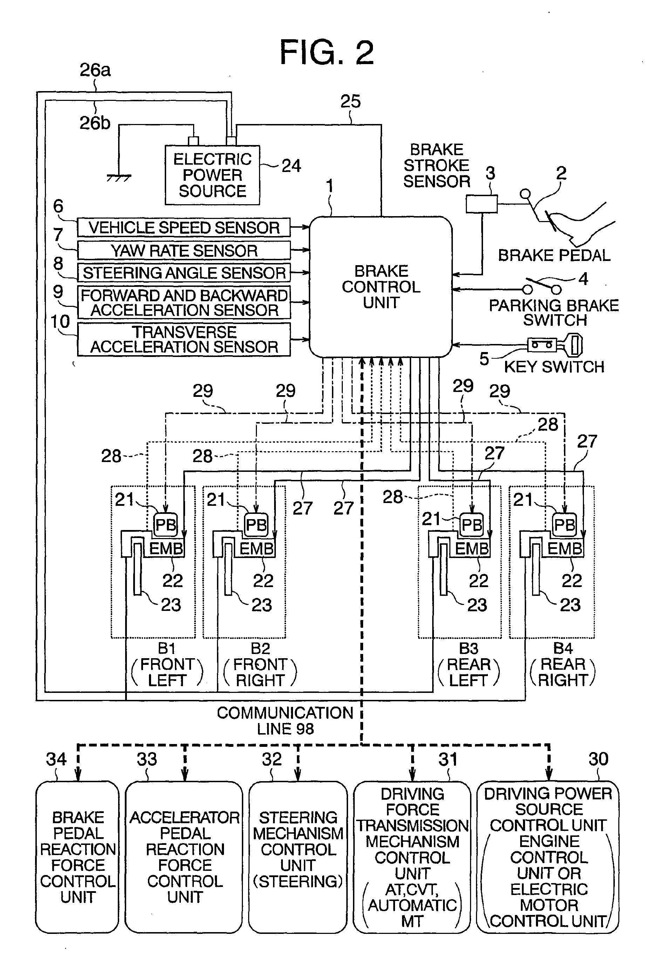

Subsequently, fig. 2 shows an embodiment of system including the brake control unit 1 and EMB units for the respective wheels as well as signal lines and electric power source lines connecting them.

Each of the EMB units for the respective wheels has a braked member 23 mounted on corresponding one of the wheels W1-W4 of an automobile 99 to rotate with the corresponding one, a braking member (not shown) and an electrically driven actuator (EMB actuator) 22 for pressing the braking member against the braked member 23 with a force of a motor. A brake disk or brake drum is usable for an example of the braked member 23, and a brake pad is usable for an example of the braking member. JP-2002-213507 discloses an example of the EMB actuator 22, however, the invention is not restricted by a specific structure of the electrically driven actuator so that various EMB actuators in structure are usable for the invention.

In fig. 2, the EMB units B1-B4 are connected to signal lines 27 through which control signals are transmitted from the brake control unit 1, signal lines 28 through which a value of pressing force or electric current of the EMB actuators 22 are transmitted to the brake control unit 1, and electric power source lines for supplying electric power to the EMB actuators 22. Incidentally, the signals lines between the brake control unit 1 and the EMB units B1-B4 may be formed in such a manner that each of the EMB units has the signal line 27 for sending signal and the signal line 28 for receiving signal as the invention, however, may be formed in such a manner that a bidirectional signal line is used for both of the signal lines for sending the signal and receiving the signal. Further, CAN may be used.

Further, an electric power is supplied to two groups to which the EMB units B1-B4 are divided, an electric power source line 26a is connected to a pair of the EMB unit B1 for front left wheel and the EMB unit B4 for rear right wheel, and an electric power source line 26b is connected to a pair of the EMB unit B2 for front right wheel and the EMB unit for rear left wheel. By this arrangement, if one of the electric power source lines has a problem, the EMB units connected to the other one of the electric power source lines can be operated normally.

Further, the electrically driven brake system of the embodiment has a parking function. The brake control unit 1 can receive a signal from a parking brake switch 4, and each of the EMB units B1-B4 has a parking mechanism 21. The parking mechanism 21 operates the brake pads to be moved or the EMB actuators 22, in accordance with an order from the outside, so that when the electric power supply is stopped, a brake pressing force (the force pressing the brake member against the braked member 23) at that time is maintained. For an example of the parking mechanism 21, a latch mechanism in which a mechanical movement is prevented by pressing a clamp member into a movable part is usable.

The parking mechanism 21 is connected to a signal line 29 to input an ordering signal from the brake control unit 1, so that the brake control unit 1 drives the EMB actuators 22 to generate the brake pressing force when a parking brake switch 4 is operated. While the brake pressing force is being generated, the parking mechanism is ordered to maintain the brake pressing force.

Further, the brake control unit 1 is connected to a communication line 98 to receive and output information from and to another control unit as occasion demands. In this embodiment, a communication with a power source control unit (engine control unit, motor control unit or the like) 30 for controlling a power generating source of the automobile and a driving force transmission control unit (transmission control unit or the like) 31 for controlling a mechanism for transmitting a driving force generated by the power source to the wheels is performed. Further, on occasion demands, a communication with a steering mechanism control unit 32 for controlling a steering mechanism, an accelerator pedal reaction force control unit 33 for controlling a reaction force of the accelerator pedal and a brake pedal reaction force control unit 34 for controlling a reaction force of the brake pedal is performed. The communication line 98 may be formed by CAN.

Further, signals are input to the brake control unit 1 from a key switch 5 as an electric source switch of the automobile (ignition key switch), a vehicle speed sensor 6 for indicating a speed of each of the wheels of the automobile (front, rear, left and right four wheels), a yaw rate sensor 7 for indicating a yaw rate of the automobile, a steering angle sensor 8 for indicating a steering angle, a proceeding direction acceleration sensor 9 for indicating an acceleration of the automobile in a proceeding direction thereof, a transverse acceleration sensor 10 for indicating an acceleration of the automobile in a transverse direction thereof and so force.

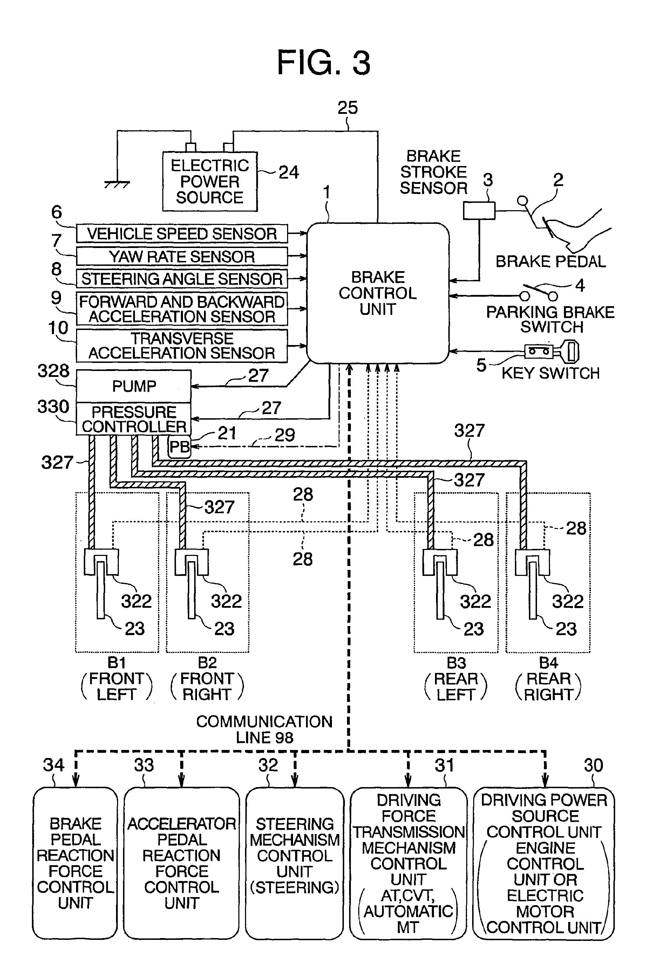

Further, the electrically driven brake may have a hydraulic pump 328 mechanically disconnected from the brake pedal 2 as shown in fig. 3, so that a hydraulic pressure generated by the hydraulic pump is supplied to a brake cylinder of each of the wheels through a pressure control part 330 and pipe arrangement 327. Hereafter, explanation regarding fig. 3 will be done while not specified structure therein is similar to that of fig. 2.

The brake control unit 1 controls the pump 328 and pressure control part 330 to adjust the hydraulic pressure supplied to the hydraulic actuator 322 of each of the wheels so that braking forces of the wheels can be adjusted independent of each other in accordance with the pressing amount of the driver measured by the brake stroke sensor 3. A control signal is transmitted from the brake control unit 1 to the pump 328 and pressure control part 330 through the signal line 27. The pressure control part 330 formed by, for example, a pressure control valve, adjusts the pressure supplied to each of the hydraulic actuators 322 of the wheels through the pipe arrangement 327 from the pump 328. Further, the hydraulic actuator 322 of each of the wheels has a sensor (not shown) for detecting the braking force generated on the each of the wheels so that this measure value is input into the brake control unit 1 through the signal line 28. The brake control unit 1 controls the pump 328 and pressure control part 330 to decrease a difference between the measured braking force of each of the wheels and a target value of the braking force determined in accordance with the pressing amount of the brake pedal. Incidentally, since the braking force of each of the wheels may be measured from the hydraulic pressure of the pipe arrangement 327, the hydraulic pressure of the pipe arrangement 327 for each of the wheels may be measured by the pressure control part to calculate the braking force of each of the wheels. Such system is so-called EHB (Electro-Hydraulic Brake).

The below embodiment is explained with making reference to the arrangement as shown in fig. 2, however, the invention is applicable to the electrically driven brake system as shown in fig. 3.

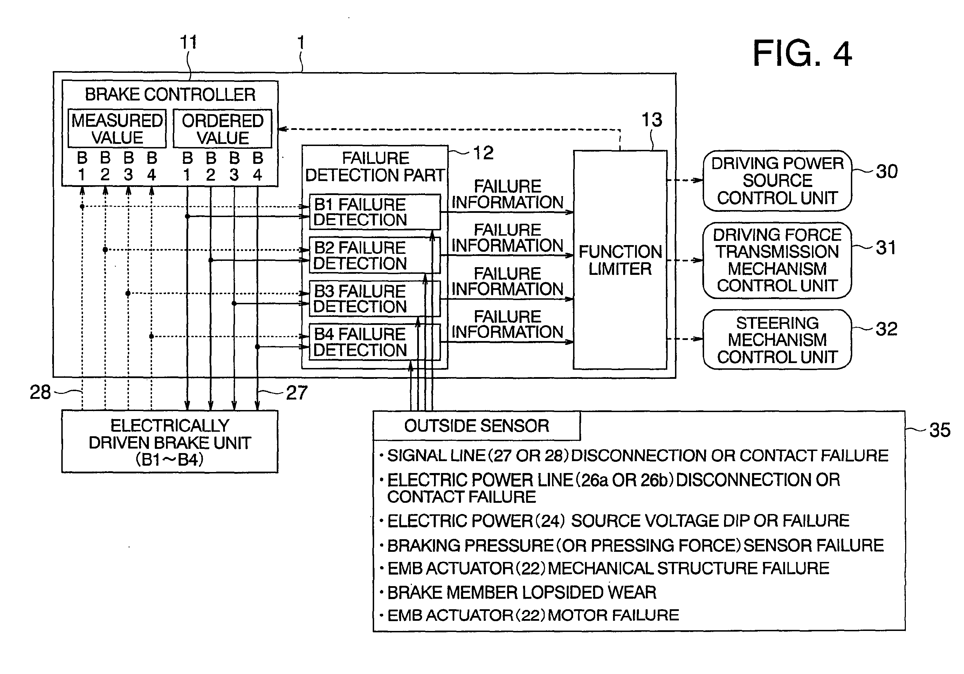

The brake control unit 1 is explained in detail with making reference to fig. 4. The brake control unit 1 has a brake control part 11 for controlling the braking forces of the EMB units B1-B4, a failure judging part 12 for detecting a failure of each of the EMB units B1-B4, a performance restricting part 13 for restricting a performance of the automobile on the basis of the failure information of the EMB units B1-B4, and a communicating part 15 (not shown) for communication with the control devices. The brake control part 11, failure judging part 12 and performance restricting part 13 may have respective calculating devices, but may be formed in a logical treatment of a single calculating device. In fig. 4 showing an information flow, an output of the performance restricting part 13 is directly input to the power source control unit 30, driving force transmission control unit 31 and steering mechanism control unit 32. Therefore, an ordered restriction value determined in the performance restricting part 13 may be transmitted to the control units 30-32 through the communicating part 15 and lines 98.

The brake controlling part 11 outputs the control signals to the EMB units B1-B4 and receives actual value signals corresponding to electric current values, pressure for pressing the brake members against the braked members or the like of the EMB actuators. Further, the brake controlling part 11 receives the operated degree of the brake pedal by the driver. The brake control part 11 outputs the control signal to each of the EMB units B1-B4 so that the received electric current value or pressure value becomes electric current value or pressure value of the control signal needed for generating the braking force corresponding to the operated degree of the brake pedal by the driver.

The failure judging part 12 receives the control signals for the EMB units B1-B4 and the actual value signals from the EMB units B1-B4 for the brake controlling part 11 so that the failure of the EMB units B1-B4 is judged from a comparison therebetween. Concretely, when a difference between the control signal and the actual value signal is not less than a predetermined value or a predetermined difference between the control signal and the actual value signal is kept for a time period not less than a predetermined time period, it is judged that the failure of the EMB unit occurs. In this structure, at least the failure of each of the EMB units can be detected independently.

Further, the failure judging part 12 may receive an information from another sensor for detecting directly a failure of various kind. In this embodiment, a signal from a sensor 35 for detecting breaking or contact failure of the signal line 27 or 28, breaking or contact failure of the electric power source line 26a or 26b, voltage drop or failure of the electric power source 24, failure of a braking pressure (or pressing force) sensor, mechanical failure of the EMB actuator 22, unsymmetrical wear of the braking member, failure of the motor of the EMB actuator 22 or the like is input. For detecting the breaking or contact failure of the signal line or electric power source line, or the voltage drop or failure of the electric power source 24, a voltage meter or electric current meter is usable. Further, the failure judging part 12 may output a signal for inspection and receive a response signal from the EMB units B1-B4 so that a normality of the response signal is judged to detect the failure of the signal line. Further, regarding the pressure sensor, mechanical structure, motor, unsymmetrical wear of the braking member or the like, the EMB units B1-B4 may have judging function to output a signal for indicating the occurrence of failure to the failure judging part 12.

The failure judging part 12 judges on the received information as to which of the EMB units B1-B4 is not usable. Which of the EMB units B1-B4 breaks down is directly detected from the control signal and actual value signal of the brake control part 11, however, which of the EMB units is not operable is changed in accordance with where the electric power source line or communication line breaks down. For example, if the electric power source line 26a breaks down at a position before a diverging point thereof in fig. 2, the EMB units B1 (front left wheel) and B4 (rear right wheel) are not operable, and if the breaking occurs after the diverging point (for example, a line for electrical supply to the EMD unit B1), the other EMB unit B4 is operable. Therefore, the failure judging part 12 may have a data of correspondence between the received failure position and the not-operable EMB unit(s) to detect the not-operable EMB unit(s).

The brake control unit 1 outputs the control signal to the EMB unit which is judged by the failure judging part 12 to be in failure, to be prevented from generating the braking force.

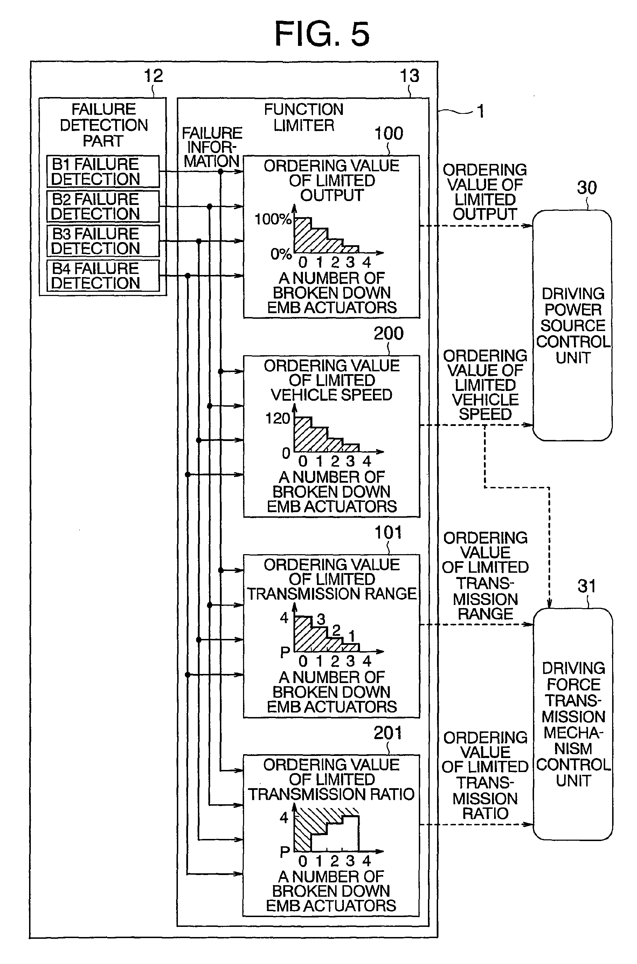

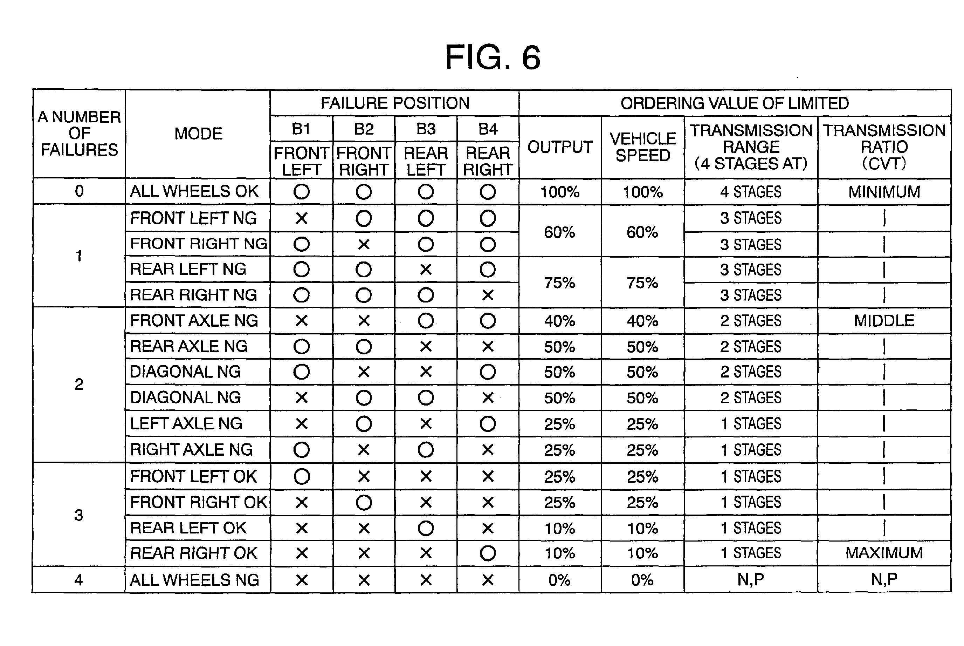

The performance restricting part 13 restricts the performance (for example, output, vehicle speed, transmission range, transmission ratio or the like) in accordance with a failure condition of the EMB units B1-B4. An embodiment of the performance restricting part 13 will be explained in detail with making reference to figs. 5 and 6.

Fig. 5 shows an embodiment of a control block of the performance restricting part 13. The performance restricting part 13 receives the failure information of the EMB units B1-B4 detected by the failure judging part. The failure information includes an information as to whether or not (OK or NG) the braking force of each of the wheels is normally controllable. The performance restricting part 13 restricts the performance of the automobile in accordance with the received OK/NG information of the electrically driven brake of each of the wheels.

An output restriction ordering part 100 determines an output restricting value in accordance with a number of NG one(s) of the EMB units on the respective wheels to output the output restricting value to the driving power source control unit of the automobile. As shown in fig. 5, the restriction value is 100 % when the number of failures is zero, but the output of the automobile is restricted in accordance with the number of one(s) of the brake units B1-B4 on the respective four wheels, which one(s) is deemed to be in failure (judged to be NG). Concretely, the output of the automobile (output usable for generating the driving force for the automobile) is restricted in accordance with an increase of the number of the broken down one(s) of the brake units, and the output is decreased to zero to prevent the automobile from proceeding in response to that the number of the broken down ones is 4 (all of the brake units of four wheels are broken down). An engine control unit or a motor control unit is usable as the driving power source control unit.

By the above construction, the output power of the automobile is decreased when the EMB unit(s) is broken down so that an obtainable speed of the automobile is decreased. Therefore, if the driver continues to drive the automobile carelessly, a safe stoppage is obtainable within the braking force decreased by the failure so that a safety of the automobile is improved in comparison with the prior art.

A vehicle speed restriction ordering part 200 determines a vehicle speed restricting value in accordance with the number of NG one(s) of the EMB units on the respective wheels to output the restricting value to the driving power source control unit 30 of the automobile and the driving force transmission mechanism control unit 31. The available maximum vehicle speed is limited to 120 km/h (not limited) when the number of failures is zero, decreased in accordance with the increase of the number of failures, and made 0 km/h to prevent the automobile from proceeding when the number of failures is 4 (all of the brake units of four wheels are broken down). Concretely, when the vehicle speed measured by the vehicle speed sensor 6 is higher than the vehicle speed restricting value determined by the vehicle speed restriction ordering part 200, the driving power source control unit 30 of the automobile and the driving force transmission mechanism control unit 31 are controlled to decrease the driving force. That is, a fuel injection rate is decreased, a fuel is prevented from being injected, a clutch is released or the like. The vehicle speed restricting value may be determined from the braking force obtainable by the EMB unit normally operating and a predetermined length for stoppage, but may be obtained from a map as described below.

Further, when descending on a slope so that the vehicle speed exceeds the vehicle speed restricting value irrespective of the decrease of the driving force, the driving power source control unit 30 and the driving force transmission mechanism control unit 31 receive an ordered value for decelerating the vehicle by engine brake, regenerative brake or the like.

A transmission ratio restriction ordering part 101 determines the transmission ratio in accordance with the number of NG one(s) of the EMB units on the respective wheels. A case in which the driving force transmission mechanism is 4 stages automatic transmission is explained here. P-range (parking), N-range (neutral) and a range of first-fourth gear ratios (unlimited) are allowed to be used if the number of NG one(s) is zero, the transmission ratio is restricted to the third gear ratio, second gear ratio and first gear ratio if the number of NG one(s) changes to 1, 2 and 3 respectively so that a minimum number of engine revolution per one revolution of vehicle wheel capable of being obtained or brought about or allowed by the transmission mechanism increases in accordance with an increase of the number of NG one(s) of the EMB units, and only the P-range and N-range are allowed to be changed to and/or maintained (so that the driving force is prevented from being transmitted from the engine or motor to the wheels) if the number of NG one(s) is four (all of the electrically driven actuator are in failure). The transmission ratio of the vehicle is controlled by the driving force transmission mechanism control unit 31. The driving force transmission mechanism may be an automatic transmission or manual transmission in which the transmission ratio can be changed automatically. Incidentally, in the transmission with the manual mode for changing the transmission ratio with operating a switch or the like by the driver, the operation o the transmission ratio restriction ordering part 101 is the same. That is, if the driver selects the shift range more than the restricted value (of the transmission ratio), the shift range is prevented from changing to the shift range more than the restricted value (of the transmission ratio).

If the driving force transmission mechanism is a non-stage transmission (CVT : continuously variable transmission), a transmission ratio restriction ordering part 201 is used instead of the transmission ratio restriction ordering part 101. The transmission ratio restriction ordering part 201 determines a transmission ratio restriction value of the non-stage transmission (CVT) in accordance with the number of NG one(s) so that the minimum number of engine revolution per one revolution of vehicle wheel capable of being obtained or brought about or allowed by the transmission mechanism increases in accordance with the increase of the number of NG one(s) of the EMB units. P-range (parking), N-range (neutral) and a range of 0.7-4.5 (unlimited) are allowed to be used if the number of NG one(s) is zero, the transmission ratio is increased if the number of NG one(s) changes to 1, 2 and 3 respectively, and only the P-range and N-range are allowed to be changed to and/or maintained (so that the driving force is prevented from being transmitted from the engine or motor to the wheels) if the number of NG one(s) is four (all of the electrically driven actuators are in failure). The transmission ratio of the vehicle is controlled by the driving force transmission mechanism control unit 31.

In the above structure, when the EMB unit(s) is in failure, a speed permitted to be performed by the automobile is decreased in accordance with an amount of the braking force obtainable by the EMB unit(s) not in failure. Therefore, if the driver forgets the failure of the brake and presses the accelerator pedal with a normal feeling when any one of the EMB units is in failure, the automobile does not accelerated to a predetermined speed so that a possibility of safe stoppage is improved.

Fig. 6 shows a detailed embodiment for restricting the performance with the performance restricting part 13. Since a body of the automobile 99 is plunged forward by an inertia force when the braking force is applied to the automobile 99, a weight of the body borne by the front wheels is greater than a weigh of the body borne by the rear wheels.

Therefore, if the brake members are pressed with the common amount of force against the braked member 23 of the EMB units B1-B4 of the wheels of the automobile 99, the braking forces actually generated on the wheels are different from each other so that generally speaking, the braking force generated on the front wheels is greater than the braking force generated on the rear wheels. Further, since a grip of the front wheels with respect to a road surface is made greater than a grip of the rear wheels with respect to the road surface by the above mentioned inertia force when braking, a slip is restrained from occurring if the greater braking force is generated on the front wheels. For positively utilizing this characteristic, the braking force of the front wheels may be predetermined to be more than the braking force of the rear wheels. Therefore, if the numbers of the one(s) in failure of the EMB units are not different from each other, the decreased degrees of the braking forces for the automobile may be different from each other in accordance with the position(s) of the one(s) in failure of the wheels. Therefore, as described below, the restriction ordering value is changed in accordance with the one(s) in failure of the wheels so that the performance of the vehicle is restricted in accordance with the still alive braking force to improve the possibility of safe stoppage.

In fig. 6, a left end column shows a number of one(s) of the brake units in failure, and a second column with respect to the left end column shows a failure mode. Central four columns show failure conditions of the brake units B1-B4 of the four wheels in the failure modes, and right four columns show examples of restriction ordering values in the failure modes.

At first, since the vehicle body is plunged forward by the inertia force when the automobile is braked as described above so that a friction between the front wheels and the road surface becomes greater than a friction between the rear wheels and the road surface, there is a characteristic of that a rate of the braking force borne by the front wheels is made greater than a rate of the raking force borne by the rear wheels to restrain the slip. Therefore, under the same number of one(s) in failure of the EMB units, the braking force capable of being generated over the automobile with the EMB unit(s) of the front wheel(s) in failure is lower than the braking force capable of being generated over the automobile with the EMB unit(s) of the rear wheel(s) in failure.

Therefore, as shown in fig. 6, when the number of one(s) in failure is 1, the restriction ordering value of the front wheel NG mode (front left NG, front right NG) is lower than the restriction ordering value of the rear wheel NG mode (rear left NG, rear right NG). Similarly, when the number of one(s) in failure is 2, the restriction ordering value of the front left and right wheels NG mode (front axles NG) is lower than the restriction ordering value of the rear left and right wheels NG mode (rear axels NG).
Further, when the number of one(s) in failure is 3, similarly, the restriction ordering value for operating the EMB units of the front wheels (front left OK, front right Ok) is higher than the restriction ordering value for operating the EMB units of the rear wheels (rear left OK, rear right Ok).

When the braking forces applied to respectively the left wheels and the right wheels are off-balance, the automobile turns to deteriorate a stability of running irrespective of that the steering is kept toward the front. Therefore, the restriction ordering value is decreased in accordance with an off-balance degree between the braking forces applied to respectively the left wheels and the right wheels.

Therefore, as shown in fig. 6, when the number of one(s) in failure is 2, the restriction ordering value for a case where the left or right front and rear wheels are NG (left wheels NG, right wheels NG) is lower than the restriction ordering value for a case where at least one of the left and right wheels is operable (OK) (diagonally NG, front axles NG, rear axles NG).

Incidentally, since the shift range restriction value is changeable among the first-fourth, N and P stages in the embodiment, it is not set minutely, but in a transmission of more transmission stages, it is preferable for the restricting value is changed in accordance with the failure mode similarly to the output power restricting value and the vehicle speed restricting value.

In the above embodiment, it is shown that when any one of the EMB units is in failure, the performance is restricted to make an acceleration of the automobile difficult so that the running speed of the automobile is decreased to improve the possibility of the safe stoppage.

However, there is a provability of that the braking force is made insufficient by a delay of braking start timing caused by that the driver forgets or does not know the failure of the brake, even if the running speed is restricted to a low degree.
Therefore, it is preferable not only that the automobile is made difficult for being accelerated, and also that the braking force capable of being generated by the still alive EMB unit(s) is made as great as possible to decrease a brake stopping distance.

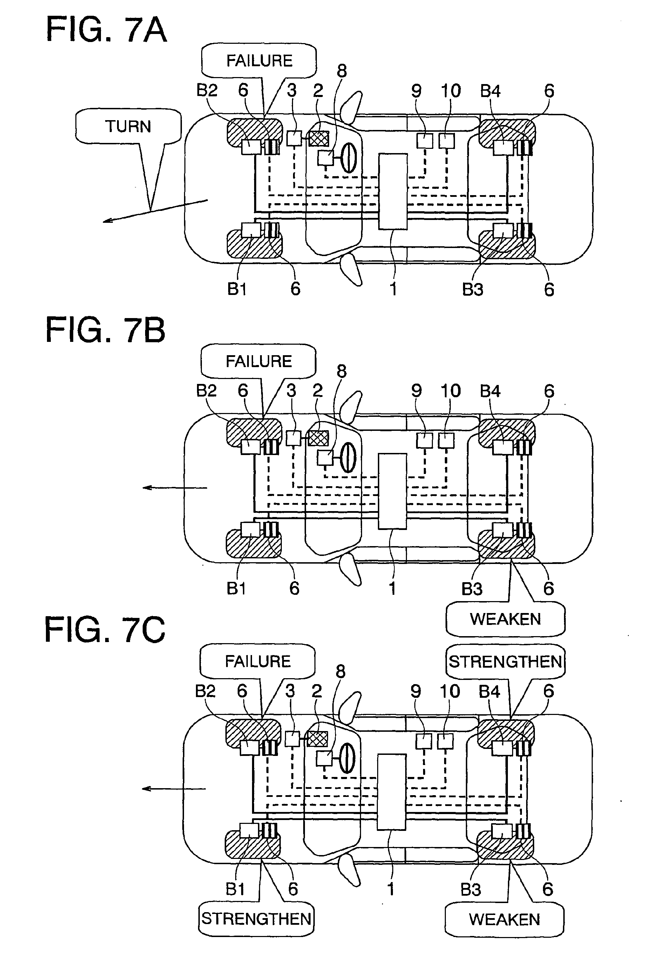

Fig. 7a shows a situation in which the EMB unit B2 of the front right wheel W2 of the automobile 99 is in failure so that the braking force cannot be generated. in this situation, since the braking force applied to the right wheels of the automobile 99 is generated by only the EMB unit B4 of the rear right wheel, the braking force applied to the right wheels becomes smaller than a total amount of the braking force applied to the left wheels W1 and W2. Therefore, there is a provability of that the automobile 99 turns to the left side with respect to the proceeding direction on certain road surface condition or vehicle speed. In this situation, since the automobile is directed to the left side when the driver presses the brake pedal, the driver needs to control the proceeding direction along a desired direction with frequently adjusting the steering. Therefore, the braking force of the wheel opposite to the wheel in failure in left and right relationship is weakened to decrease a difference in generated braking force between the left wheels and the right wheels of the automobile 99 to balance with each other.

For balancing the braking forces generated on the left wheels and the braking forces generated on the right wheels with each other in the automobile 99, a total amount of the braking forces generated on the left wheels (W1, W3) and a total amount of the braking forces generated on the right wheels (W2, W4) may be balanced with each other.

In the embodiment, the braking force of the wheel (diagonal wheel) diagonally opposite (through a center gravity of the automobile as seen vertically) to the wheel (wheel in failure) with the EMB unit in failure in the vehicle body is weakened. The diagonally opposite relation ship is formed between the front right wheel and rear left wheel and between the front left wheel and rear right wheel.

For example, when the EMB unit B2 of the front right wheel is in failure, as shown in fig. 7b, the braking force of the EMB unit B3 is weakened in comparison with the normally generated braking force. Further, when the EMB unit B4 of the rear right wheel is in failure, the EMB unit B1 of the front left wheel is weakened in comparison with the normally generated braking force. Here, "normal" means a situation in which the EMB units of all of the wheels are not in failure, and "weakened in comparison with the normally generated braking force" means a situation in which the braking force actually generated in response to a predetermined operated degree or operating force of the brake pedal or braking force ordering value from another control device is weakened than the braking force normally generated in response thereto.

Incidentally, the control of the braking force as described above is brought about by modifying the control signal transmitted from the brake control unit t the EMB units B1-B4. The brake control part 11 modifies the control signal on the basis of information from the failure judging part 12 or performance restricting part 13. Concretely, the braking force ordering value for each of the EMB units B1-B4 generated on the basis of the detected operated degree of the brake pedal by the driver is modified on the basis of the signal from the failure judging part 12 or performance restricting part 13 so that the braking force ordering value transmitted to the EMB units B1-B4 to be adjusted is made lower than the normal value.

In the above structure, under the failure mode of the number of one(s) in failure is 1, the EMB units of the front and rear wheels of a pair diagonally opposite to each other can generate the normally generated braking force. Therefore, the braking force capable ofbeing generated is increased in comparison with the case in which the left and right braking forces are balanced with each other, so that a possibility of that the automobile can be stopped safely is improved.

Further, in the above structure, although a rotational moment of force caused by the unbalance between the left and right braking forces cannot be prevented completely, since the difference between the left and right braking forces are suppressed certainly, the generated rotational moment is smaller in comparison with a case without the above described control. Further, the automobile can keep a stability for proceeding straightly with a restituting force of tires under the slight unbalance between the left and right braking forces. In the above structure, since the stability for proceeding straightly is maintained certainly, the decrease of the braking force is restrained in comparison with the prior art and an increase of the brake stopping distance is restrained, the possibility of that the automobile can be stopped safely is improved when any one(s) of the EMB units is in failure.

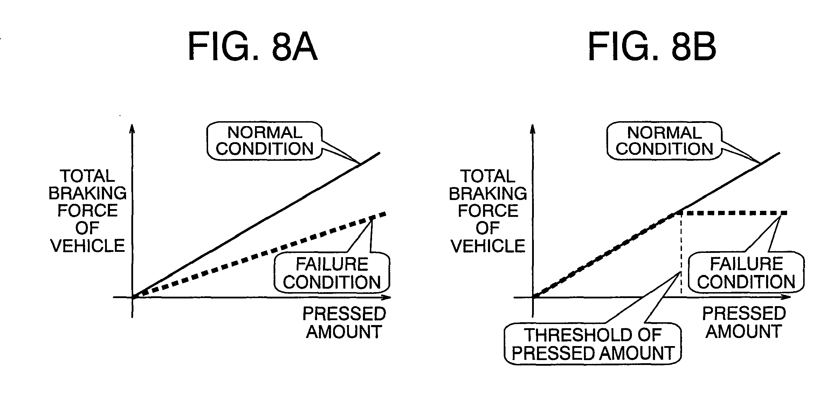

As described above, when any one(s) of the EMB units of the respective wheels is in failure so that a fail open mechanism is operated, the one(s) in failure of the EMB units does not generate the braking force. Therefore, when the one(s) of the EMB units of the respective wheels is in failure, a total amount of the braking force capable of being generated on the automobile decreases as shown in fig. 8a. The abscissa of fig. 8 indicates a pressed degree of the brake pedal, and the ordinate indicates the total amount of the braking force generated on the automobile. Incidentally, although a relationship between the pressed degree and the braking force is linear, an actual relationship may be made nonlinear by a condition of the road surface or the like.

Therefore, the driver needs to recognize that when the one(s) of the EMB units of the respective wheels is in failure, the braking performance is inferior to the normal braking performance and to press the brake pedal by more degree in comparison with the normally required degree to obtain a desired braking force.

However, the driver has an operating sense of a relationship between the braking force generated by the automobile and the pressed degree as obtainable when the EMB units of the respective wheels operate normally. Particularly, for an accustomed car such as a private car, a braking performance or feeling for the safe stoppage as to how degree the pedal needs to be pressed, at what speed the pedal needs to be pressed and at what position the pedal needs to be pressed is memorized.

Therefore, if the relationship between the pressed degree and the braking force is changed, the driver erroneously operates the brake with the normal feeling to cause insufficiency of the braking force even under the restricted proceeding speed of the automobile as described above. Further, if the driver intends more degree of brake operation in comparison with the normal brake operation in consideration of the failure of the brake, the more degree of pressing the brake pedal in comparison with the normal pressing degree causes a mental resistance against a provability of abrupt braking so that a mental load of the driver increases.

Therefore, as shown in fig. 7c, the braking force for the wheel diagonally opposite to the EMB unit in failure is weakened and the braking forces of the remainder two wheels are increased. As shown in fig. 8b, the braking force is generated normally until the pressed degree reaches a predetermined threshold pressed degree value.

The driver uses in the normal driving, a range not more than a certain degree in the braking force capable of being generated by the automobile. That is, in a diagram of fig. 8a, the braking force needed for the normal driving is obtained in a range of left side from a certain value.

Therefore, if any one(s) of the EMB units is in failure, the relationship between the pressed degree and the braking force generated over the vehicle can be kept as the same as the normal condition by increasing the braking force of one(s) not in failure of the wheels in the range where the pressed degree is relatively small.

The threshold pressed degree value as described above is predetermined as described below. At first, a maximum braking force for failure capable of being generated by the automobile is obtained by taking a weakening amount of braking force necessary for balancing the left and right braking forces with each other from a maximum value of the total amount braking force capable of being generated by the remainder one(s) not in failure of the EMB units in accordance with a position (front right, front left, rear right, rear left) of the one(s) in failure of the EMB units. For example, it is supposed that a total amount of the maximum braking forces capable of being on the four wheels not in failure is 100 % wherein an amount of the maximum braking force capable of being on each of the front right and left wheels is 30%, and an amount of the maximum braking force capable of being on each of the rear right and left wheels is 20%, and the EMB unit of the front right wheel is in failure. In this condition, a total amount of the maximum braking forces capable of being generated by the remainder EMB units not in failure is 70% of the total amount of the maximum braking forces capable of being on the four wheels not in failure, however, the braking force of each of the left rear and front wheels needs to be smaller than its maximum value so that the difference in generated braking force between the left rear and front wheels and the right rear and front wheels is decreased to a certain degree. Therefore, the braking force capable of being generated on the automobile for generating the maximum braking force for failure as the threshold pressed degree value is smaller than 70 % as the simply calculated value.

Next, from the relationship between the braking force generated by the automobile and the pressed degree as normally obtainable when all of the EMB units are not in failure, the pressed amount for generating the maximum braking force for failure as the threshold pressed degree value is calculated. It is preferable that a threshold value of the pressed amount is preset for each of the failure modes to be stored as data of map or the like in the brake control unit 1.

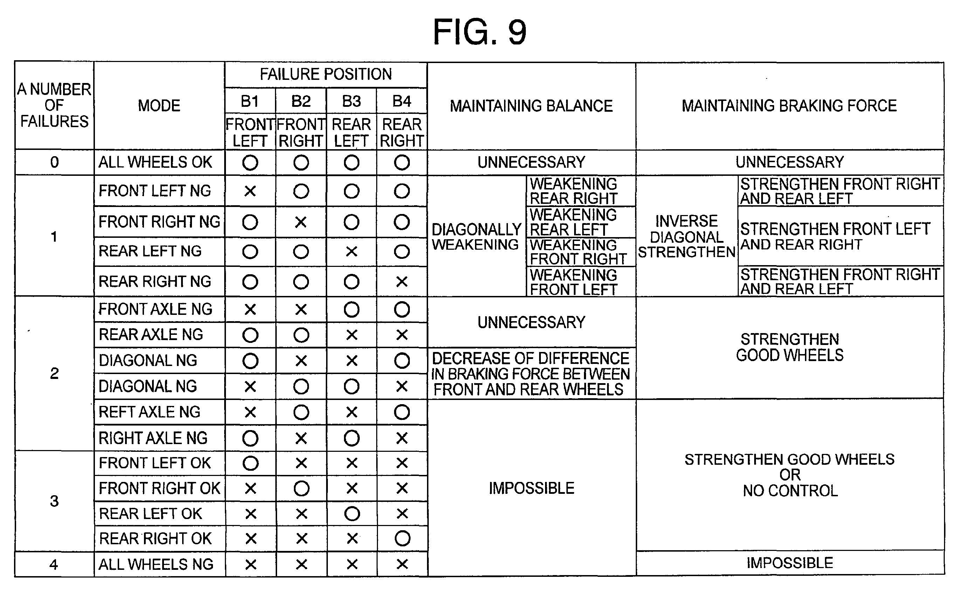

Further, although an example in which the number of the one(s) in failure is 1 is explained in fig. 7, similar control is performable in a case in which the number of the one(s) in failure is not less than 2 as shown in fig. 9. In the case in which the number of the one(s) in failure is 2, when the front axles are NG, the rear axles are NG or the diagonal axles are NG, the braking forces of the ones in not failure of the EMB units are increased in comparison with the normal or not-in-failure condition to maintain the same driving feeling as the normal condition until reaching the predetermined pressed amount or the pressed amount for generating the maximum braking force for failure as the threshold pressed degree value.

In this situation, the braking forces of the left side and the right side does not need to be balanced with each other in the front axles NG mode or the rear axles NG mode, however, a difference between the braking force of the front axles and the braking force of the rear axles needs to be decreased so that the braking forces of the left side and the right side are balanced with each other, when the difference between the braking force of the front axles and the braking force of the rear axles as obtainable in the normal condition is great.

Incidentally, in the failure mode in which the number of ones in failure is not les than 3 and the failure mode in which the number of ones in failure is not les than 2 while the left axles are NG or the right axles are NG, the control for balancing the braking forces of the left side and the right side with each other is impossible. In these case, since the increase of the braking force causes a moment of force for rotating around the one not in failure of the EMB units or a lock of the one not in failure of the wheels so that the running stability of the automobile is deteriorated, the braking force may be prevented from strengthened.

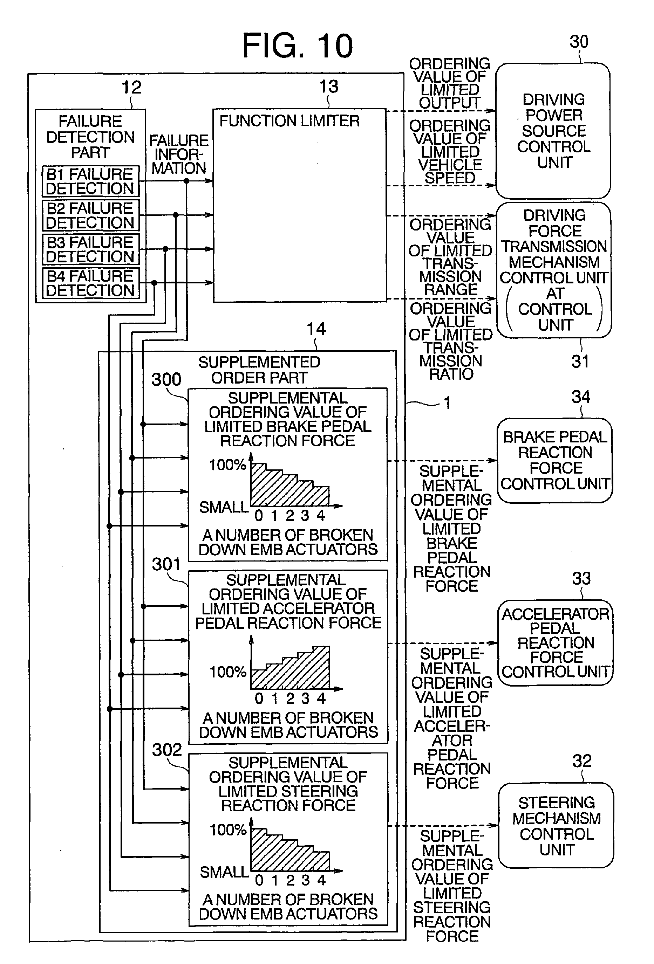

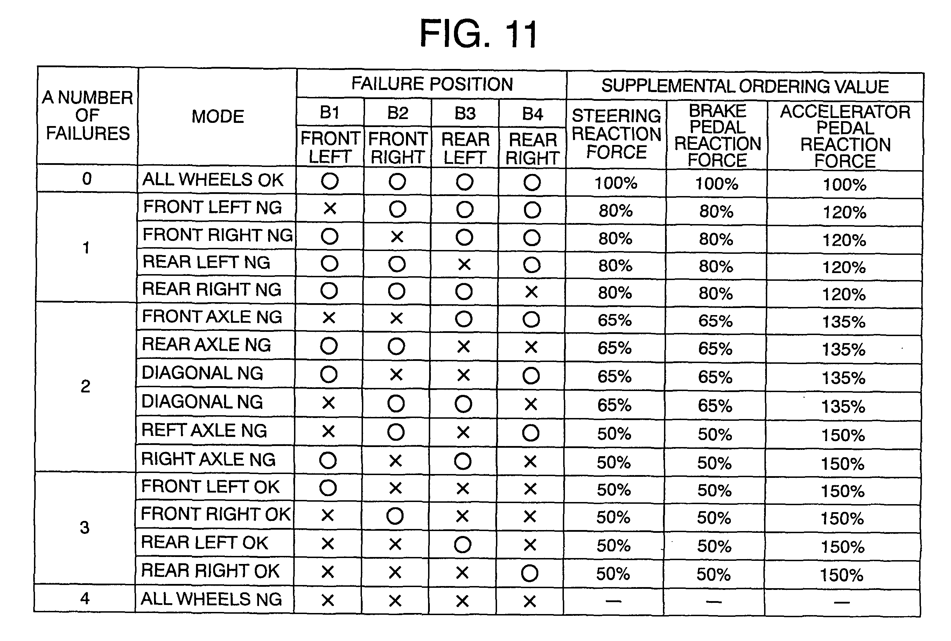

Another embodiment is explained with making reference to figs. 10 and 11. Fig. 10 is a block view showing in detail the brake control unit 1 shown in fig. 2, while a supplemental ordering part 14 is added. The parts not shown in fig. 10 are the same as those shown in figs. 2 and 5. Although the performance restricting part 13 is briefly shown in fig. 10, it has the same structure and performance as those shown in fig. 5.

In the above described vehicle running control device, since the output, shift range or the like is made low when the EMB unit(s) is in failure, the driver is constrained to drive the vehicle at the low speed. Since a steering angle per a curvature radius along which the automobile proceeds is increased in accordance with a decrease of the speed of the automobile, the continuous driving at the low speed increases a physical load of the driver.

Therefore, a reaction force of the steering is decreased to enable the driver to operate the steering with a smaller force in comparison with the normal condition, when any one(s) of the EMB units is in failure.

A steering reaction force supplemental ordering part 302 determines a reaction force restricting value for changing the reaction force against the steering in accordance with the number of one(s) in failure of the EMB units, to be output to the steering mechanism control unit 32. The steering mechanism control unit 32 controls on the basis of the input reaction force restricting value a reaction force control mechanism (not shown) arranged on the steering. The reaction force restricting value determines the reaction force as shown in fig. 11 so that for example, the reaction force is 100% when the number of one(s) in failure is 0, and is decreased in accordance with an increase of the number of one(s) in failure. The steering reaction force can be controlled by adjusting a force assisting a power steering mechanism.

In this structure, when the low speed running is continued by restricting the output or the like of the automobile, the steering can be operated with a smaller force in comparison with the prior art so that the automobile can be easily driven to decrease a fatigue of the driver.

Further, when the obtainable output or vehicle speed is restricted in accordance with the number of one(s) in failure of the EMB units, for example, when the number of one(s) in failure of the EMB units is 3, the performance is restricted frequently when the accelerator pedal is operated with the same feeling as the normal condition. When the performance is restricted, the force for driving the automobile is compulsorily cut to bring about and release the performance restriction repeatedly so that the force for driving the automobile is changed frequently to make a ride quality of vibrating forward and backward frequently.

For preventing this phenomenon, the accelerator pedal needs to be operated in a range in which the performance restriction is not brought about, however, operating the pedal in such restricted range increases the load of the driver. Therefore, when any one(s) of the EMB units is in failure, the reaction force from the accelerator pedal is increased so that it is difficult for the driver to press the pedal deeply.

An accelerator pedal reaction force supplemental ordering part 301 determines an increasing value of the accelerator pedal reaction force in accordance with the number of one(s) in failure of the EMB units, to be output to an accelerator pedal reaction force control unit 33. The accelerator pedal reaction force is a force for pressing a toe of the driver against the pedal and recognized by the driver as a load of the pedal. The accelerator pedal reaction force control unit 33 controls on the basis of the input increasing value of the reaction force a reaction force control mechanism (not shown) arranged on the accelerator pedal. The increasing value of the reaction force is determined as shown in fig. 11 so that for example, the reaction force is 100% when the number of one(s) in failure is 0, and is increased in accordance with the increase of the number of one(s) in failure.

When the any one(s) of the EMB units is in failure, the braking force generated by the automobile is decreased. Therefore, the driver needs to operate the brake pedal more frequently in comparison with the normal condition. Particularly, when descending a slope, the brake pedal needs to be pressed continuously for a longer time period in comparison with the normal condition. Therefore, when the any one(s) of the EMB units is in failure, the brake pedal reaction force is restricted so that the pedal is made light for being operated to decrease the fatigue of the driver.

A brake pedal reaction force supplemental ordering part 300 determines a restriction value of the brake pedal reaction force in accordance with the number of one(s) in failure of the EMB units, to be output to a brake pedal reaction force control unit 34. The brake pedal reaction force control unit 34 controls a reaction force control mechanism arranged on the brake pedal on the basis of the input reaction force restricting value. Contrary to the accelerator pedal, the brake pedal reaction force decreasing value is determined as shown in fig. 11 so that for example, the reaction force is 100% when the number of one(s) in failure is 0, and is decreased in accordance with the increase of the number of one(s) in failure.

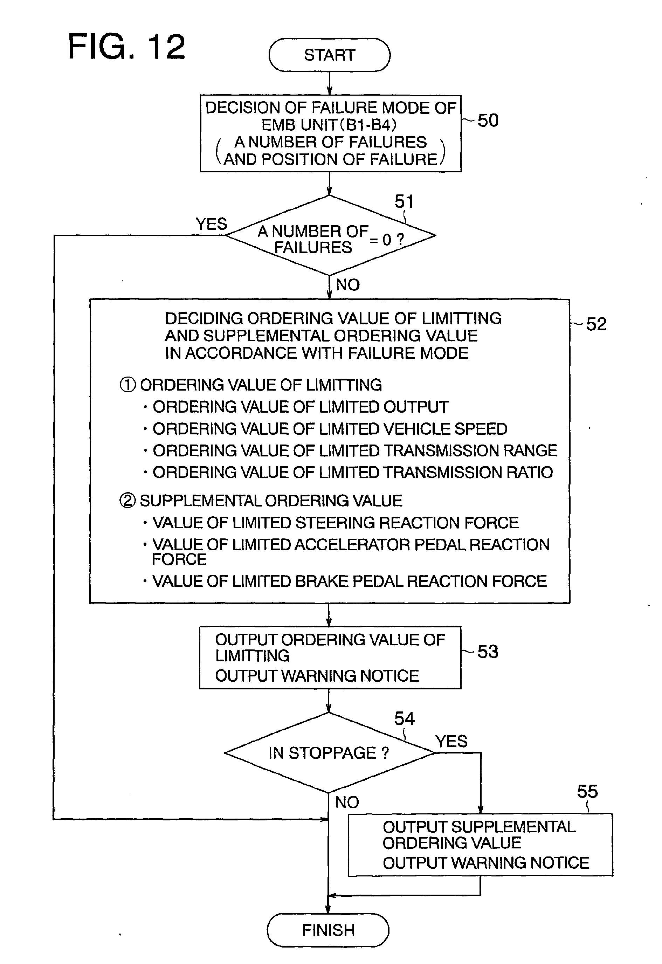

Fig. 12 shows a control flow of the brake control unit 1. The failure (OK/NG) of each of the EMB units (B1-B4) is judged at step 50 to determine the number of one(s) in failure and the position of the failure (failure mode). Which the number of one(s) in failure is, zero or more is judged at step 51 so that when the number of one(s) in failure is zero, the control sequence is finished. When the number of one(s) in failure is not zero, step 52 is brought about. At step 52, various restricting values and supplemental ordering values are determined on the basis of the determined failure mode. Although in fig. 12, the restricting values and supplemental ordering values for all of the output, vehicle speed, shift range, transmission ratio, steering reaction force, brake pedal reaction force and accelerator pedal reaction force are determined, it is necessary for all of them to be determined. As described in the above embodiment, an object(s) whose performance is restricted or assisted in accordance with the restricting value or supplemental ordering value may be selected as occasion demands.

At step 53, the determined restriction ordering value is output to the other control unit(s) (the driving power source control unit 30, driving force transmission mechanism control unit 31 or the like). In accordance with the output restriction ordering value, the other control unit(s) restricts the performance. Since this restriction of the automobile performance in accordance with the restriction ordering value is significantly important for safely stopping the automobile, the restriction is brought about even when the automobile is running. For notifying the driver that the brake is in failure, an alarm is output. As the alarm, a well known voice or indicator is usable, and it is preferable for the driver to be capable of recognizing as to what performance is restricted and how the performance is restricted.

Incidentally, when an value of the object to be controlled (output, speed, shift range, transmission ratio) is not included by an allowed range to which the restriction ordering value has been applied, the value of the object to be controlled may be controlled to be included within the allowed range, however, there is a provability of that preventing the vehicle from being accelerated or abrupt deceleration causes a dangerous situation at an intersection, accelerating lane of highway or the like. Therefore, when the value of the object to be controlled is not included by the allowed range to which the restriction ordering value has been applied in response to detecting the failure of the EMB unit, the restriction ordering value may be prevented from being applied to, and after the value of the object to be controlled is included by the allowed range, the restriction ordering value may be applied to. In this situation, it is preferable for the alarm for the driver to be output in response to that the failure of the EMB unit is detected.

At step 54, whether or not the automobile is stationary is judged. If being stationary, step 55 is brought about to output the various supplemental ordering values. If not being stationary, the sequence is finished, because it is dangerous for the reaction force characteristic of the steering, accelerator pedal or the like to be changed when driving the automobile.

By repeating this control flow with predetermined intervals, the supplemental ordering value is output in response to a first stoppage of the automobile after the failure of the EMB unit, so that the reaction force characteristic of the steering or pedal is changed.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A brake control apparatus for controlling braking applied to wheels (W1, W2, W3, W4) of a motor driven vehicle to decelerate the vehicle, comprising,
a braking force generator (Bl, B2, B3, B4) for generating a braking force applicable to the wheels,
a failure detector (12) for detecting a failure of generating the braking force on at least one of the wheels, and
a controller (13) for changing an actually obtainable degree on the vehicle in accordance with the detected failure.

2. A brake control apparatus according to claim 1, wherein the controller (13) is capable of changing in accordance'with the detected failure a rate of the actually obtainable degree with respect to an ordered degree, and the rate is changed in accordance with whether or not the failure on the at least one of the wheels is detected.

3. A brake control apparatus according to claim 1 or 2, wherein the controller (13) is capable of changing in accordance with the detected failure a rate of the actually obtainable degree with respect to an ordered degree, and the rate is changed in accordance with a number of the at least one of the wheels on which the failure is detected.

4. A brake control apparatus according to at least one of claims 1-3, wherein the controller (13) is capable of changing in accordance with the detected failure a rate of the actually obtainable degree with respect to an ordered degree, and the rate obtainable when the failure on the at least one of the wheels is not detected is greater than the rate obtainable when the failure on the at least one of the wheels is detected.

5. A brake control apparatus according to at least one of claims 1-4, wherein the controller (13) is capable of changing in accordance with the detected failure a rate of the actually obtainable degree with respect to an ordered degree, and the rate obtainable when the failure on the at least one of the wheels is not detected is smaller than the rate obtainable when the failure on the at least one of the wheels is detected.

6. A brake control apparatus according to at least one of claims 1-5, wherein the controller (13) is capable of changing in accordance with the detected failure a rate of the actually obtainable degree with respect to an ordered degree, and the rate increases in accordance with an increase of the number of the at least one of the wheels on which the failure is detected.

7. A brake control apparatus according to at least one of claims 1-6, wherein the controller (13) is capable of changing in accordance with the detected failure a rate of the actually obtainable degree with respect to an ordered degree, and the rate decreases in accordance with an increase of the number of the at least one of the wheels on which the failure is detected.

8. A brake control apparatus according to at least one of claims 1-7, wherein the controller (13) is capable of changing in accordance with the detected failure a rate of the actually obtainable degree with respect to an ordered degree, the rate obtainable when the failure on the at least one of the wheels is not detected is smaller than the rate obtainable when the failure on the at least one of the wheels is detected, and another rate of another actually obtainable degree on the vehicle with respect to the ordered degree obtainable when the failure on the at least one of the wheels is not detected is greater than the another rate obtainable when the failure on the at least one of the wheels is detected.

9. A brake control apparatus according to at least one of claims 1-8, wherein the controller (13) is capable of changing in accordance with the detected failure a rate of the actually obtainable degree with respect to an ordered degree, the rate obtainable when the failure on the at least one of the wheels is not detected is different from the rate obtainable when the failure on the at least one of the wheels is detected, and another rate of another actually obtainable degree on the vehicle with respect to the ordered degree obtainable when the failure on the at least one of the wheels is not detected is equal to the another rate obtainable when the failure on the at least one of the wheels is detected.

10. A brake control apparatus according to at least one of claims 1-9, wherein one of an actual maximum power value for driving the vehicle, an actual maximum vehicle traveling speed value and an actual maximum number of revolution of the wheel per one revolution of the motor permitted to be obtained when the failure on the at least one of the wheels is detected is smaller than corresponding one of an actual maximum power value for driving the vehicle, an actual maximum vehicle traveling speed and an actual maximum number of revolution of the wheel per one revolution of the motor permitted to be obtained when the failure on the at least one of the wheels is not detected.

11. A brake control apparatus according to at least one of claims 1-10, wherein when the controller (13) is capable of changing in accordance with the detected failure a rate of the actually obtainable degree with respect to an ordered degree, the vehicle has four of the wheels and the failure on one of the wheels is detected, a rate of the braking force value to be actually applicable to the other one of the wheels diagonally opposite to the one of the wheels with respect to an ordered braking force value is made smaller than another rate of the braking force value to be actually applicable to the other one of the wheels with respect to the ordered braking force value obtainable when the failure on the one of the wheels is not detected.

12. A brake control apparatus according to at least one of claims 1-11, wherein a rate of the braking force value to be actually applicable to the one of the wheels with respect to the ordered braking force value obtainable when the failure on the one of the wheels is detected is made smaller than another rate of the braking force value to be actually applicable to the one of the wheels with respect to the ordered braking force value obtainable when the failure on the one of the wheels is not detected.

13. A brake control apparatus according to at least one of claims 1-12, wherein a rate of the braking force value to be actually applicable to the further other one of the wheels other than the one of the wheels and the other one of the wheels with respect to the ordered braking force value obtainable when the failure on the one of the wheels is detected is made greater than another rate of the braking force value to be actually applicable to the further other one of the wheels with respect to the ordered braking force value obtainable when the failure on the one of the wheels is not detected.

14. A brake control apparatus according to at least one of claims 1-13, wherein a rate of the braking force value to be actually applicable to each of the further other two of the wheels other than the one of the wheels and the other one of the wheels with respect to the ordered braking force value obtainable when the failure on the one of the wheels is detected is made greater than another rate of the braking force value to be actually applicable to each of the further other two of the wheels with respect to the ordered braking force value obtainable when the failure on the one of the wheels is not detected.

15. A brake control apparatus according to at least one of claims 1-14, wherein when the ordered braking force value is less than a predetermined value, a rate of the braking force value to be actually applicable to the further other one of the wheels other than the one of the wheels and the other one of the wheels with respect to the ordered braking force value obtainable when the failure on the one of the wheels is detected is made greater than another rate of the braking force value to be actually applicable to the further other one of the wheels with respect to the ordered braking force value obtainable when the failure on the one of the wheels is not detected, and when the ordered braking force value is not less than the predetermined value, the rate of the braking force value to be actually applicable to the further other one of the wheels with respect to the ordered braking force value obtainable when the failure on the one of the wheels is detected is prevented from being made greater than the another rate of the braking force value to be actually applicable to the further other one of the wheels with respect to the ordered braking force value obtainable when the failure on the one of the wheels is not detected.

16. A brake control apparatus according to at least one of claims 1-15, wherein when the controller (13) is capable of changing in accordance with the detected failure a rate of the actually obtainable degree with respect to an ordered degree, the vehicle has four of the wheels and the failure on the one of the wheels is detected, a rate of the braking force value to be actually applicable to the other one of the wheels with respect to an ordered braking force value obtainable when the one of the wheels is a front one in a proceeding direction of the vehicle is made smaller than another rate of the braking force value to be actually applicable to the other one of the wheels with respect to the ordered braking force value obtainable when the one of the wheels is a rear one in the proceeding direction of the vehicle.

17. A brake control apparatus according to at least one of claims 1-16, wherein a value of the braking force is adjustable by changing a contact pressing force between a stationary member restrained from moving with respect to a vehicle body and a rotary member connected to each of the wheels, the controller is capable of changing in accordance with the detected failure a rate of the braking force value to be actually applicable to at least one of the wheels with respect to an ordered braking force value, the rate of the actually applicable braking force value with respect to the ordered braking force value is changeable by changing a rate of the contact pressing force value with respect to the ordered braking force value, the rate of the contact pressing force value with respect to the ordered braking force value is changeable by changing at least one of a rate of, with respect to the ordered braking force value, an instruction signal value to be applied to an actuator to generate the contact pressing force value corresponding to the instruction signal value and a rate of, with respect to the actually measured contact pressing force value, a comparison signal value varying in accordance with the actually measured contact pressing force value to be compared with the instruction signal value to decrease a difference between the instruction signal value and the comparison signal value, and the at least one of the rate of the instruction signal value with respect to the ordered braking force value and the rate of the comparison signal value with respect to the actually measured contact pressing force value varying in accordance with the detected failure is predetermined in a memory of the apparatus.

18. A brake control apparatus according to at least one of claims 1-17, wherein the controller (13) is capable of changing in accordance with the detected failure a rate of the actually obtainable degree with respect to an ordered degree, and the rate obtainable when the failure on the at least one of the wheel is detected is less than the rate obtainable when the failure on the at least one of the wheel is not detected, when a pair of the actually obtainable degree and the ordered degree is one of a pair of an actually obtainable power value for driving the vehicle and an ordered power value for driving the vehicle, a pair of an actually obtainable vehicle speed value of the vehicle and an ordered vehicle speed value, a pair of an actually obtainable braking force value applicable to the wheels and an ordered braking force value, a pair of an actually obtainable braking force value applicable to selected at least one of the wheels and an ordered braking force value, a pair of an actually obtainable brake pedal reaction force value and an ordered braking force value, and a pair of an actually obtainable steering wheel reaction force value and an ordered steering angle value.

19. A brake control apparatus according to at least one of claims 1-18, wherein the controller (13) is capable of changing in accordance with the detected failure a rate of the actually obtainable degree with respect to an ordered degree, and the rate obtainable when the failure on the at least one of the wheel is detected is more than the rate obtainable when the failure on the at least one of the wheel is not detected, when a pair of the actually obtainable degree and the ordered degree is one of a pair of an actually obtainable number of motor revolution per one revolution of the wheel and an ordered number of motor revolution per one revolution of the wheel, a pair of an actually obtainable braking force value applicable to selected at least one of the wheels and an ordered braking force value, and a pair of an actually obtainable accelerator pedal reaction force value and an ordered power value for driving the vehicle.

20. A brake control apparatus according to at least one of claims 1-19, wherein when the controller (13) is capable of changing in accordance with the detected failure a rate of the actually obtainable degree with respect to an ordered degree, the vehicle has four of the wheels, the failure on a pair of the wheels diagonally opposite to each other is detected and the failure on another pair of the wheels diagonally opposite to each other is not detected, a difference between a rate of the braking force value to be actually applicable to one of the wheels of the another pair with respect to an ordered braking force value and a rate of the braking force value to be actually applicable to the other one of the wheels of the another pair with respect to the ordered braking force value is made smaller than a difference between the rate of the braking force value to be actually applicable to the one of the wheels of the another pair with respect to the ordered braking force value and the rate of the braking force value to be actually applicable to the other one of the wheels of the another pair with respect to the ordered braking force value obtainable when the failure of the pair of the wheels and the another pair of the wheels are not detected.
